# EUROPEAN PATENT APPLICATION

(11) **EP 3 632 676 A1**
(43) Date of publication of application: **08.04.2020**
(21) Application number: 18198273.7
(22) Date of filing: 02.10.2018
(51) Int. Cl.: B32B 27/08, B32B 27/20, B32B 27/32, B32B 27/38, B32B 27/40

(54) **LAYERED STRUCTURE WITH MULTIPLE LAYERS, USE OF AND METHOD THEREFORE**

(71) Applicant: Ventus Engineering GmbH, 1030 Wien (AT)
(72) Inventor: LÜBKER, Poul Anker Skaarup, 6310 Baar (CH); MINGALIEV, Shavkat, 1010 Wien (AT)
(74) Representative: Tellefsen, Jens J.

(57) **Abstract**

The present invention relates to a layered structure with multiple layers. The layered structure can be adapted to be attached to a substrate face. The layered structure can comprise an adhesion layer and a top stack. The adhesion layer may have an attachment surface. The adhesion layer may be adapted to attach to the substrate face with the attachment surface facing the substrate face. The top stack can comprise a top layer with an outer surface. The adhesion layer and the top stack can be arranged in a sandwich construction wherein the top stack may be attached to the adhesion layer with the outer surface facing away from the adhesion layer. At least one layer comprised by the layered structure may be a functional layer.

The present invention relates to the use of the layered structure method therefore and a process for obtaining the layered structure.

## Description

### Field of the Invention

The present invention relates to a layered structure with multiple layers. The layered structure can be adapted to be attached to a substrate face. The layered structure can comprise an adhesion layer and a top stack. The adhesion layer may have an attachment surface. The adhesion layer may be adapted to attach to the substrate face with the attachment surface facing the substrate face. The top stack can comprise a top layer with an outer surface. The adhesion layer and the top stack can be arranged in a sandwich construction wherein the top stack may be attached to the adhesion layer with the outer surface facing away from the adhesion layer. At least one layer comprised by the layered structure may be a functional layer.

The present invention relates to the use of the layered structure, a method therefore, and a process for obtaining the layered structure.

### Background of the Invention

Surface properties of a device or structure may have a significant influence on parameters such as lifespan, productivity, maintenance, suitable operation conditions, and installation sites, amongst others. The surface properties may therefore have a significant influence on suitable use and annular yield of the device or structure.

Durability of a device or structure may highly depend on the durability of the surface of the device or structure.

Especially long-term use in harsh conditions may cause wear and tear on the surface or parts thereof. The wear and tear may be mechanically induced, e.g. stress; or due to weather conditions, such as changes in temperature, extreme temperatures; as well as exposure to chemical conditions or radiations, just to mention some factors that may impact the durability of a surface.

Maintaining a surface may be a demanding task that is both labour intensive and time consuming, not only the task itself but also in the preparative and subsequent work of planning the maintenance, transporting personnel and materials to and from a site, or transporting the device or structure itself.

The device or structure may include production machinery of various kinds, and the maintenance may in such cases also include significant downtime of the machinery with reduced output on a yearly basis. The overall wear and tear for production machinery may include daily abrasion.

The extent of the tasks related to maintaining a surface may cause extensive considerations and calculations in regard to weighing the risk of more severe damages contra performing maintenance well in advance of the actual need.

Postponing maintenance may lead to more severe damage of the surface leading to breakdown or extensive repairs on the device or structure, which may increase daily costs for maintaining and/or repairing, and may reduce the lifespan productivity of the structure.

For many structures, some areas may be more exposed to wear and tear than other areas and may therefore require a more sustainable surface. Sustainable surfaces may require special materials which may increase initial costs of the construction and change the properties of the structure. The changed properties may result in increased weight of the construction or require new production methods or construction methods related to the structure.

Thus, some of the challenges in developing more durable surfaces relate to optimizing materials used for individual parts.

Durability is only one example of a significant parameter of a structure.

Another issue could be causing disturbance or inconvenience for the surroundings. Disturbance in the surroundings may be caused by noise, light and/or signals such as radar and sonar signals, mechanical vibrations, amongst others. Such disturbances may depend on surface properties of the structure or parts thereof and may be enhanced or reduced by altering the surface properties.

Productivity may be another significant parameter where the surface properties, such as the shape of the surface, the roughness of the surface, absorption of, or adsorption to a surface may increase the productivity of a structure.

### Object of the Invention

It is an object of this invention to overcome one or more of the aforementioned shortcomings of the prior art. One specific object is to provide means for selected functionalities of selected surface areas.

### Description of the Invention

The aforementioned aspects may be achieved by a layered structure with multiple layers. The layered structure can be adapted to be attached to a substrate face. The layered structure can comprise an adhesion layer and a top stack. The adhesion layer may have an attachment surface. The adhesion layer may be adapted to attach to the substrate face with the attachment surface facing the substrate face.

The top stack can comprise a top layer with an outer surface.

The adhesion layer and the top stack can be arranged in a sandwich construction, wherein the top stack may be attached to the adhesion layer with the outer surface facing away from the adhesion layer.

At least one layer comprised by the layered structure may be a functional layer. The functional layer may contain functionalized graphene-containing material. The functional layer may be configured with a layer-functionality. The layered structure may provide a functional surface area to the substrate face. The functional surface area may have a surface-functionality caused by the layer functionality.

Graphene can be a one-atom-thick layer of carbon atoms arranged in a honeycomb (hexagons or chicken-wire) crystal lattice.

Graphene-based materials may be functionalized with different side groups for different properties. The number of side groups for each carbon atom may differ depending on the functionalization and/or which properties to achieve. Functionalized graphene-based materials may be in dry powder form, liquid or ink - these being inexhaustible examples.

The functionalized graphene-based materials may have superior properties, such as for example a large surface area, mechanical stability, and tuneable electrical and optical properties making the functionalized graphene-based materials advantageous for use in or on surfaces. The properties of functionalized graphene-based material may further include that it is stronger than steel, has a thin two dimensional structure, is highly conductive, highly malleable, is stretchable with further properties of being transparent, flexible, hydrophobic, impermeable, and radiant-absorbent e.g. light-, radar-, and sonar-absorbent.

Graphene-based materials may be structured, designed or presented in a number of ways: e.g. porous graphene-based material, wherein a number of carbon atoms are lacking in the structure. This type of graphene-based material may be stacked or folded to form 3D structures, and the lateral size may be varied.

Graphene-based materials and functionalized graphene-based materials may respectively be referred to as source graphene-based materials and functionalized source graphene-based materials.

A method for functionalization of the graphene-based materials may comprise the following acts:
- choice of graphene-based materials,
- selection of appropriate chemical side-group(s), and
- level and/or density of functionalization.
This being an inexhaustible example.

Functionalized graphene-containing material may encompass one or more functionalized graphene-containing material(s).

Functionalized graphene-based materials are extremely diverse materials, and may be embedded in a matrix additive host/carrier material to be used in material compositions matrix of intermediate or host/carrier materials to produce different materials with various significantly improved properties turning the mix into a high-performance functionalized graphene-containing material. The host/carrier material may have more than one functionalized graphene-containing material added, depending on which one or more properties are required to be synthesized into the functionalized graphene-containing material.

The ratio of functionalized graphene-based materials comprised in the functionalized graphene-containing material depends on the host/carrier material and the properties to be achieved by the functionalized graphene-containing material.

Correctly functionalized graphene-based materials have a unique ability to give its attributes to the matrix of intermediate or host/carrier materials. The functionalization may cause the rough texture of the graphene-based materials to expand, thereby creating a significantly larger surface area. The planar structure of functionalized graphene-based materials creates a significant surface inducing a large contact area with the host/carrier material, because both the top and bottom surfaces of a graphene sheet are in close contact with the host/carrier material. The host/carrier material may be the material in the matrix binding to the functionalized graphene-based material.

In one aspect the graphene-based material may be functionalized to bond tightly with surrounding polymers, improving interfacial load transfers and boosting the surface area in contact with the polymers.

Moreover, the aspect ratio (ratio between a lateral dimension and the thickness of the graphene sheet) of a single graphene sheet can reach more than 2000. The surface area of a single graphene sheet can theoretically reach 2600 m2/g which may provide a significant amount of potential sites for advantageous chemical or physical interactions. This may accordingly improve bonding between one or more graphene sheets and host/carrier material.

The layer functionality can be linked to the properties of functionalized graphene-based materials comprised in the functionalized graphene-containing material. The layer functionality may arise due to a combination of properties of functionalized graphene-based materials. Alternatively, the layer functionality may arise due to a combination of properties of functionalized graphene-based materials and properties of the matrix material. The layer functionality may be corresponding to a single property of a functionalized graphene-based material. The layer functionality may be leveled depending on the amount of functionalized graphene-based material comprised in the functionalized graphene-containing material.

One effect of the embodiment may be that the layered structure may provide a surface functionality not present in the top layer in itself. The surface functionality may be caused from another layer in the structure. This may have the advantage of obtaining a top layer acting for example as a protective layer for another layer in the layered structure.

In the following the layered structure may be described as adapted for attachment to a substrate face or being attached to a substrate face, where the substrate face may be part of the surface or a structure or device. To distinguish between the layered structure and the device or structured whereto the layered structure may be attached, the term 'device structure' is used for the device or structure an may use to include a wide range of devices, machinery, industrial plants, buildings amongst others, which surface or parts of the surface becomes the substrate face whereto the layered structure may be attached.

In one aspect, the top layer may be tolerant or resistant to sunlight while another layer in the layered structure is heat conductive but is not tolerant to long-term sunlight exposure.

In one aspect, a layered structure comprising a conductive layer may be attached to a device structure with the effect of achieving a conductor system or part of a conductor system after the device structure is constructed and even after installation. In order to reduce wear and tear, the conductor system may be protected by a top layer , thereby avoiding comprehensive work with retrofitting the device structure to include a traditional wired conductor system protected by the device structure itself.

One effect of this embodiment may be to incorporate a lightning conductor system into the device structure by use of the layered structure. This may be advantageous in regard to achieving new ways to design lightning protection systems.

Alternatively, the conductor system could be used as a heating system, e.g. by using Ohmic heating.

Functionalized graphene containing material may have a high electrical and heat conducting capacity which may be suitable for de-icing systems.

A further effect of the embodiment may be that the conductor system may be designed with improved electro-static properties and act as anti-static roots to discharge and divert anti-static away from vulnerable areas.

In one aspect, the conductive structure may be connected to a controlled power source which is powered on/off according to defined climatic conditions. One effect of this embodiment may be to achieve de-icing systems to be activated when there is icing on the device structure. Another effect may be achieving a de-icing system which may be activated under certain climatic conditions to prevent an accumulation of icing on the device structure. This may be advantageous in regard to achieving a low energy consumption de-icing system, where the passage of an electric current through a conductor produces heat, also known as Joule heating, Ohmic heating or resistive heating.

A functional layer may even provide a multiple-functional surface. The surface functionalities may comprise heating and cooling functionalities in combination with lightning protection and protection against static electricity.

In other aspects the layer functionality of a layer comprising graphene may be altered by applying a current or a voltage. This may for example include the change from a dielectric material to a conductive material, from an opaque material to a transparent material, or from a resilient material to a hard material. These few examples may be a few amongst others and may not be read as an exhaustive list.

In one aspect, the functional layer may comprise multiple layer functionalities whereof at least one is due to the content of functionalized graphene-based material. This could for example be an adhesion layer having both the functionality of being self-adhesive at the attachment surface to a substrate face and at the same time with layer functionalities such as:
- Providing an increased surface area on one surface compared to the other surface,
- Providing high mechanical stability,
- Providing tunable electrical properties,
- Providing optical properties,
- Providing high conductivity,
- Providing high malleability,
- Providing stretchable properties
- Providing transparent properties,
- Providing flexible properties,
- Providing radiant absorbing properties, e.g. light absorbing, radar absorbing, sonar absorbent,
   - Being impermeable to radiant energy in specified intervals.

Such an adhesion layer in combination with a protective top layer may have the effect of providing a surface functionality of increased strength, stiffness, toughness and/or flexibility. This may be advantageous in the regard that a reduced deflection/bending of the parts reduce fatigue and thus a prolonged lifespan of the device structure. Further advantages may be limiting the risk of cracks in the substrate surface and thus in general achieving a device structure less prone to damage when the surface is intact. Limiting the risk of surface damage of the substrate face may generally result in reduced service costs and lifespan extension.

The possible surface functionalities obtained by the above-described exemplary embodiments may open op for further effects, such as mass production of device structures to be used for different purposes by simply attaching a layered structure with a given surface functionality.

This could for example be in connection with boats, skies or surfboards where a given surface strength or wearability may be beneficial but also where a smooth surface may be sought for racing purposes and/or for the purpose of reduced energy consumption due to reduced friction between the surface and the surroundings.

Reduced energy consumption due to reduced friction between the surface and the surroundings may also be highly relevant for applications of the layered structure in the airspace industries, where the multi-layered structure may be applied to the wings, blades and/or body of a flying construction e.g. a plane, a helicopter, drones or comparable constructions. The friction caused be a surface may be designed for special purposes and may also be relevant for related applications such as paragliders or the like.

Improved surface functionality due to attachment of a multilayer structure may be especially relevant for marine applications for parts being semi-submerged and fully submerged.

In the case of semi-submerged part this concerns the parts being at water level, where the collision with ice and other floating elements may cause score in the construction, which may evolve to severe damage of the construction. A layered structure with improved surface strength may preclude or reduce the damage inflicted on the substrate face being the surface protected by the layered structure.

In the case of submerged parts, an improved surface strength may also be highly relevant in relation to collision similar to the semi-submerged parts. A highly hydrophobic surface with a sufficient strength may be especially relevant to reduce fouling. Tis may be reduced by reducing scores in the surface and by obtaining a degree of self-cleaning by the water stream achieved when in motion.

A change in surface functionality could also be interesting in connection with compliance to restrictions in certain geographical areas. This could be in connection with installation of wind turbines, cranes or comparable device structures close to airports, where a radiant absorbent surface may be required in order to not affect the signalling by reflections.

Alternatively, a highly radiant reflective surface may be useful for other device structures and sites. This may be advantageously achieved by attaching an appropriate layered structure to an off-the-self device structure.

One effect of a functional top layer may be improved barrier properties of the surface such as a hydrophobic surface, a wear-resistant surface and/or an environmental-resistant surface. The improved barrier properties of the surface may prevent dirt, salt, and/or insects amongst others from sticking to the surface. This may further be advantageous in regard to reduced cleaning maintenance on the device structure. Aggregation of residues may begin to cause corrosion of the surface.

In one aspect, the functionalized graphene-containing material may be a resin, a polymer, an epoxy, a coating, foam, ink amongst others.

In one aspect, functionalized graphene-based material may be mixed into a matrix of intermediary or host/carrier materials.

In one aspect, the functionalized graphene-based material may be in dry powder form. Dry powder may also include granulates.

In one aspect, the functionalized graphene-based material may be in liquid form.

In one aspect, the functionalized graphene-based material may be an ink.

Furthermore, the possibility of altering the surface functionality after production or installation may open up for new designs of known device structures or use of different materials for the device structures.

In an alternative embodiment, the top layer could be a functional layer proving the properties mentioned above for the adhesion layer. Using a functional top layer may have other effects due to the layer in itself may directly cause the surface functionality without being indirectly caused by a layer functionality of the adhesion layer. A functional top layer may provide surface functionalities, such as environmentally resistant, hydrophobic, radiant transparent or radiant reflectance.

Another effect of the layered structure may be that mass produced device structures may be adapted for specific installation sites or use by attaching different configurations of the layered structures with appropriate surface functionality without incorporating new intermediate acts in the production process.

In one embodiment of the layered structure, the top stack may comprise at least one intermediate layer arranged between the adhesion layer and the top layer in the sandwich device.

The intermediate layer may be a functional layer with layer functionality. One effect of this embodiment may be that the functional layer in the layered structure is protected or isolated from the surroundings. Hence, isolated from the substrate and the environmental surroundings and thus protected from the direct environmental surroundings. This may be advantageous in regard to incorporating fragile or delicate features into the layered structure. One example could be electrically conductive systems, which may advantageously be isolated from the substrate and protected from wearability by the top layer. Another example could be printed and/or imprinted structures which cause a surface functionality of the outer surface. The printed and/or imprinted layer structures may be advantageously protected by the top layer from wearability. Furthermore, the layer structures may be of a nature which could reduce the adhesion to the substrate face if they were to be comprised in the adhesion layer on the attachment face.

The intermediate layer may have layer functionality in line with those previously described for the adhesion layer and the top layer.

Alternatively, the intermediate layer may not be a functional layer. One effect may be to increase the thickness of the layered structure using a cheap material. This may enhance the durability of the layered structure without using a more expensive functionalized graphene-containing material.

A non-functional intermediate layer may be used for separating or isolating two layers. This may be advantageous if the layered structure comprises two functional layers having electrically conductive properties and being used as electrically conductive.

In one embodiment, the layered structure may comprise two functional layers. One functional layer may have a layer-functionality being different from the layer-functionality of another functional layer.

One effect of this embodiment may be that a multifunctional surface may be achieved. Such a multifunctional surface may be impossible to achieve using a single functional layer, because the graphene structures giving the different layer functionalities may not be compatible together in the same matrix material.

Multiple layer functionalities may per nature of the layer functionality not be incorporated in one layer. One exemplary embodiment could be a functional layer being stretchable and another layer having high mechanical stability which could be relevant for use on a substrate with a high thermal expansion coefficient.

Another effect may be that one of the layer functionalities are enhanced by incorporating an additional functional layer with different layer functionality. One exemplary embodiment could be a functional top layer with a high wearability or high environmental resistance in combination with a functional intermediate layer which is resilient or shock-absorbing. This combination may result in an enhanced wearability or environmental resistance of the outer surface due to decreasing the influence of impacting forces on the outer surface.

In one embodiment, the layered structure may comprise a feature layer. The feature layer may be configured with a layer-functionality.

The feature layer may be made of a non-graphene-containing material. Hence, a material not comprising functionalized graphene-based materials.

Similar to the embodiment with an intermediate layer being a functional layer with printed and/or imprinted structures, a non-functional intermediate layer may be used in a similar way for similar effects and advantages. Another exemplary embodiment with an intermediate layer being a functional layer could be the previously described layered structure with a resilient layer. A resilient layer may be obtained without using a functionalized graphene-containing material: in combination with a functional top layer with a high wearability or high environmental resistance, an enhanced wearability or environmental resistance of the outer surface may be achieved.

Yet another exemplary embodiment may be a non-conductive feature layer arranged between two conductive functional layers. The feature layer may have the effect of avoiding shortcuts and/or other interaction between the two conductive functional layers.

One advantage of using a feature layer instead of a functional layer may be the use of off-the-shelf materials providing a layer-functionality to be incorporated in the layered structure. Using an off-the-shelf material may reduce costs of making the layered structure compared to using functionalized graphene-containing material. Another advantage may be easier and continuous availability of off-the-shelf materials compared to functionalized graphene-containing materials.

In one embodiment of the layered structure, the top layer may be made of a resin. The cured resin may have a layer thickness in the range of 100-1000500µm (1E-6m), preferably in the range of 100-500µm or even more preferably in the range 200-400µm. The adhesion layer may be made of a resin. The cured resin may have a layer-thickness in the range of 20-500µm, preferably in the range of 50-300µm or even more preferably in the range 70-150µm.

In one aspect of the layered structure, the top layer may be made of polyurethane having a layer thickness in the range of 100-1000µm, preferably in the range of 100-500µm or even more preferably in the range 200-400µm. The adhesion layer may be made of polyethylene having a layer-thickness in the range of 20-500µm, preferably in the range of 50-300µm or even more preferably in the range 70-150µm.

In one aspect, the layers may have considerably larger thicknesses. Larger thicknesses may be used for high impact use. The use may be at the ice-impacting surface on an ice-breaker vessel where larger thicknesses may be used. In such case and similar applications the thickness of the layered structure may be in the range of centimetres - where a thickness between 1 and 10 centimetres may be used, but without being limited to this thickness range.

The thickness of the single layers may be chosen according to the application and the level of functionality. For example a high-voltage application may be implemented using a layer with a thickness in the millimetre to centimetre range.

In one aspect the layers are made of polymers. The functional layers may be polymer layers, where the functionalized graphene-based materials are mixed into the resin.

In one embodiment, the layered structure may be configured as a foil with foil outer surfaces. The foil outer surfaces may be the attachment surface and the outer surface provided by the layered structure. The foil may be adapted to be attached to the substrate face with the attachment surface.

Foil may include film, tape, wrap sheet or comparative terms for comparable structures. In one aspect parts of the multi-layered structure may be extruded or produced by comparative processes or concepts.

In one aspect, the attachment surface may comprise adhesive properties. In another aspect an adhesive may be applied to the substrate face and/or to the foils attachment surface.

This embodiment may have the effect that may be achieved by an off-the-self product. Various foils providing different surface functionalities to a device structure may be available to the user and thus a device structure may be modified for different uses or surroundings with different impacts on the surface.

The adhesive properties may be incorporated in the foil. The adhesive properties may be made suitable for specific substrate faces in regard to the material types comprised in the substrate face. Alternatively, a general purpose adhesive property may be provided.

The adhesive property may be accommodated by layer functionalities of the layered structure. The foil may be expandable by heat or be stretched when applying. The foil may shrink when applied due to cooling or due to an electrical effect in a functional layer. Other properties induced by magnetic effects may be used. These are simply meant as exemplary adhesive properties without being exhaustive.

This embodiment may have the effect that the attachment of the layered structure may be performed without health risks due to hazardous substances, e.g. aerosols being released or created in the attachment process.

The adhesive may alternatively be an intermediate product to be applied between the substrate face and the attachment surface, thereby obtaining that one type of foil may be attached to specific substrate faces by choosing an appropriate adhesive.

In one embodiment, the layered structure may be configured as a coating. The coating may be deposited in a sandwich construction. The adhesion layer may be deposited on the substrate face. The top stack may be deposited on the adhesion layer with the outer surface facing away from the substrate face.

The coating may be applied one layer at a time with the benefit of being able to make a specific layered structure. This may be advantageous if this specific layered structure is only applied to a restricted number of device structures. E.g. the coating may be applied with each layer having a thickness, which varies over the area to which it is deposited.

Applying a coating may require skilled personnel. A coating may be applied as wet layers and may comprise solvents for improved adhesion to the substrate face.

In one embodiment, the layered structure may comprise a functional layer being electrically conductive.

Functionalized graphene-containing material may provide for high thermal conductivity. This may be advantageous in several aspects. One aspect may be in the fabrication and application of the layered structure itself in regard to achieving optimized formation of chemical bonds in the manufacturing process, and for attachment of the layered structure to the substrate face by heating of the layered structure for causing improved or active adhesion.

Use of functionalized graphene-containing material may also provide for better electrical conductivity. This may be advantageous in regard to achieving a low energy consumption heating system, where the passage of an electric current through a conductor produces heat, also known as Joule heating, Ohmic heating or resistive heating. This may be advantageous in regard to achieving optimized formation of chemical bonds in the manufacturing process, and thus improved final performance of the layered structure.

The effects and advantages of the use of a functionalized graphene-containing material in the layered structure may include amongst others:
- increased terminal conductivity, which may be important in the manufacturing process,
- providing an electrical conductive material,
- increased lightning conducting properties,
- increased electro-static properties,
- increased strength, stiffness and toughness, and
- improved impact resistance.

Thereby achieving amongst others the following advantages:
- improved fire retardation,
- faster molding time due to faster temperature equilibrium,
- more uniform molding with reduced risk of micro cracks due to controlled temperature. less laminating time and reduced process costs,
- increased resistance to delamination,
- weight savings,
- reduced material costs,
- reduced exothermic and micro cracking during fabrication,
- enabling thicker section moldings and manufacture of thicker structures,
- more homogeneous and better part quality,
- increased damage tolerance,
- may be used for de-icing purposes,
- ability to act as lightning rods to divert lightning away from vulnerable areas,
- ability to act as anti-electro-static rods to discharge and divert electro-static away from vulnerable areas,
- ability to act as a light absorbing surface,
- ability to act as a radar-absorbent surface,
- ability to act as a sonar-absorbent surface,
- ability to provide a super hydrophobic surface, and
- ability to provide a surface roughness different to the existing surface.

In one embodiment, the layered structure may comprise a functional layer or a feature layer being radiation absorbent.

The radiation-absorbent feature layer is used for absorbing radiation of both pressure waves and electromagnetic waves. Hence, radiation-absorbent feature layer includes the ability to absorb light, radar and sonar signals.

The effects and advantages of a radiation-absorbent feature layer have been described in connection with the previous embodiments of this invention. These include amongst others considerably reducing or completely eliminating reflection of waves from the functional surface area.

This may reduce the visual pollution and noise scattered from device structures and may be especially advantageous in regard to installation sites closer to or in inhabited areas.

A reduction or completely elimination of radar reflections may be an advantage in regard to installation sites close to airports and other sensitive areas.

In one embodiment, the layered structure may comprise a functional surface area being hydrophobic.

A number of effects and advantages of a hydrophobic functional surface have been described in connection with previous embodiments of this invention and includes amongst others that it may prevent dirt, salt, and/or insects amongst others from sticking to the surface. A hydrophobic surface may therefore, if regularly exposed to heavy rain, be considered self-cleaning. This may further be advantageous in regard to reduced maintenance for cleaning the device structure. Aggregation of residues may begin to cause corrosion of the surface.

In one embodiment, the layered structure may comprise a functional surface area with an outer surface structure.

The outer surface structure may be incorporated directly in the outer surface by imprint, 3D printing or similar techniques.

In one aspect, the surface structure may be incorporated in an intermediate layer or in the adhesion layer. Such a surface structure may be smoothened due to latter layers incorporated thereon resulting in a surface structure on the outer surface being different than the original incorporated surface structures. This may be advantageous in regard to applying rough surface structures in the layered structure, which may give an outer surface structure with smoothened features.

In one aspect, single layers may be partly or fully 3D printed. The 3D printed layer may comprise printed structures of functionalized graphene-containing ink.

In one exemplary embodiment the layered structure may comprise five layers, a top layer, an adhesion layer and three intermediate layers. The layered structure may accommodate a surface being super hydrophobic and particle repellant. The top layer may be a transparent mat polymer film with a thickness in the range 300µm. The intermediate layer adjacent to the top layer may accommodate a functional layer being light-absorbing and thus, with a reduced light reflectance back to the top layer. The intermediate layer, adjacent to the light-absorbing layer, may be a conductive functional layer accommodating for Joule heating to support a de-icing functionality. The next intermediate layer, being the layer between the conductive functional layer and the bottom layer may accommodate a functional layer being an organic solar cell or a photovoltaic. This layer may provide for power delivery to the Joule heating and thus the de-icing functionality. Adhesion layer may have an adhesive effect.

In one exemplary embodiment the layered structure may comprise six layers, a top layer, an adhesion layer and four intermediate layers. The multi-layered structure may accommodate a surface being super environmentally resistant. The top layer may be a transparent elastic mat polymer film with a thickness in the range of 300µm. The intermediate layer adjacent to the top layer may be flexible and impact-absorbing. This may be provided by a 60µm transparent acrylic PSA film. However, other polymer films may also be used. The impact-absorbing layer may cause the functional surface area to provide for a functional surface area being super environmentally resistant. This may be due to dampening the impacts of particles inflicting on the surface area. The remaining four layers of the layered structure - the three remaining intermediate layers and the adhesion layer - may be a structure similar to that described for the five layered structure, possibly accommodating a surface being super hydrophobic and particle repellant, with a functional layer being light-absorbing, a conductive functional layer accommodating for Joule heating to support a de-icing functionality, a functional layer being an organic solar cell or a photovoltaics layer, and the adhesion layer may have an adhesive effect.

In one embodiment the two exemplary embodiments may be attached to the surface of a blade or a wing. Thereby, a surface may be achieved with multiple functional surface areas being different from each other, thereby optimizing the blade or wing according to its use and location.

In one exemplary embodiment the six-layered and five-layered structures described above may be applied to a wind turbine blade. Especially the leading edge of a wind turbine blade experiences a high level of erosion, as this is the edge that cuts through the air. The six-layered structure may be applied to the leading edge accommodating for a surface being super environmentally resistant. In combination with that the five-layered structure may be applied to remaining areas of the wind turbine blade, accommodating for a surface being super hydrophobic and particle repellant, this means that a surface may be achieved with multiple functional surface areas having different functionalities according to the use.

An objective of the invention may be achieved by use of the layered structure on a surface area with a substrate face.

The layered structure may be a used in vast number of industries and for a broad range of purposes. This may include applications such as lining in reservoirs and/or tanks, wind turbines and in the renewable energy, maritime and airspace industries, but also for cars, cranes or buildings.

For maritime use, surface functionalities including the following may be advantageous: Smooth or flush, hydrophobic and dirt repellant. A flush surface may provide for lower water resistance and thus for higher speed or alternatively for a reduction in used fuel.

For wind turbine blades, an increased roughness on parts of or on the entire surface may be preferred to extract more energy from the wind. The increased roughness should be seen in light of the current standard for blade surfaces. The use of a layered structure may have the advantage that as the surface roughness deteriorates over time, the layered structure may be replaced instead of having to replace the entire wind turbine blade. For the leading edge of the wind turbine blades, one may prefer a layered structure with a more environmentally resistant surface - this could be provided by only the outer layer - or this could be provided by the outer layer in combination with one or more intermediate layer, e.g. a resilient layer as described in previous embodiments of the invention.

The layered structure may also be used on components where you want to transfer heat away in a controlled manner, for example electronics which need cooling etc.
In one aspect, the layered structure may be light-absorbing.
In one aspect, the layered structure may be radar-absorbing.
In one aspect, the layered structure may be sonar-absorbing.
In one aspect, the layered structure may be heat- or electrically conductive.
In one aspect, the layered structure may provide a functional surface area with an improved wear resistance, meaning it has an improved wear resistance compared to a surface area where non-graphene-containing material is used.
In one aspect, the functional surface area may be hydrophobic.
In one aspect, the functional surface area may be with a different roughness compared to the roughness of the existing surface.
In one aspect, the functional surface area may be fire retardant.
In one aspect, the functional surface may be able of transporting heat away from the existing surface.

An objective of the invention may be achieved by a layered structure with multiple layers, an attachment surface and an outer surface. The layered structure may be adapted to be attached to a substrate face and the multiple layers may be arranged in a sandwich construction. The layered structure may comprise at least one functional layer containing functionalized graphene-containing material. The functional layer may be configured with a layer-functionality.

The layered structure may be obtained by a process comprising for each functional layer one or more acts of:
- Providing functionalized graphene;
- Mixing the functionalized graphene into a carrier material;
- Making a granulate suitable for extrusion, and
- Extruding the granulate into a single layer foil.
The process further comprising acts of:
- Receiving multiple single layer foils in parallel, and
- Extruding the single layer foils into a foil with a layered structure.

An extrusion process may provide for fabricating single layer foils with a uniform thickness. This may be advantageous in regard to obtaining a layered structure with a uniform thickness and with uniform properties over the entire foil. Changes in thickness of functional layers may increase or decrease the level of the layer functionality. Hence, a uniform thickness of the individual layers may be of importance.

In an exemplary embodiment, three different formulas for functionalized graphene may be used: one for layer X, one for layer Y and one for layer Z. The process for obtaining the multilayer structure could comprise the following sequences for each of the layers X, Y and Z, denoted by n in the following:
Produce functionalized graphene specifically for layer n. Mix functionalized graphene for layer n into a carrier material chosen specifically for layer n. The mix of functionalized graphene for layer n and the chosen carrier material can be made into a granulate n specifically for extruding layer n. Granulate n may be extruded into a defined layer n.

The layers X, Y and Z are then fed in parallel into an extrusion machine which extrudes a foil with the layered structure.

One embodiment of the layered structure is obtained by a process comprising a further act of providing a surface structure to a single layer foil by a printing process before performing the existing acts of receiving multiple single layer foils in parallel and extruding the single layer foils into a foil with a layered structure.

The process act of extruding the layered structure from multiple single layer foils may provide for altering the surface of the single layer foils to incorporate further layer-functionalities.

This may include 3D printed structures or entire layers. The 3D printed structures may be made of functionalized graphene-containing ink.

An objective of the invention may be achieved by a method for retrofitting a surface having at least one surface area with a substrate face. The method may comprise an act of attaching a layered structure to the at least one surface area.

An objective of the invention may be achieved by a method for retrofitting a surface. The method may comprise an act of applying one layered structure to one surface area and another layered structure to another surface area. The layered structures may provide multiple functional surface areas, with one functional surface area having a surface functionality different from the surface functionality of another functional surface area.

Retrofitting of surface may be relevant in a vast number of industries and for a broad range of purposes. This may include previous described applications such as lining in reservoirs and/or tanks, wind turbines and in the renewable energy, maritime and airspace industries, but also for cars, cranes or buildings.
In one aspect, the layered structure may be light-absorbing.
In one aspect, the layered structure may be radar-absorbing.
In one aspect, the layered structure may be sonar-absorbing.
In one aspect, the layered structure may be heat- or electrically conductive.
In one aspect, the layered structure may provide a functional surface area with an improved wear resistance, meaning it has an improved wear resistance compared to a surface area where non-graphene-containing material is used.
In one aspect, the functional surface area may be hydrophobic.
In one aspect, the functional surface area may be with a different roughness compared to the roughness of the existing surface.
In one aspect, the functional surface area may be fire retardant.
In one aspect, the functional surface may be able of transporting heat away from the existing surface.

The effects and advantages of retrofitting surfaces with the multilayered structure are in line with those already described for previous embodiments.

The method may have the effect that a surface may be retrofitted with a layered structure providing a new surface functionality to the surface. Alternatively the surface functionality may be maintained but with a new layered structure before the surface is damaged, thereby prolonging the lifespan of the device structure.

In one exemplary embodiment, the leading edge of a wind turbine blade may be retrofitted. The leading edge is the region of the blade that typically experiences the highest level of erosion, as this is the edge that cuts through the air. On the leading edge surface, a super environmentally resistant surface may be preferred. The remaining surface may be retrofitted with a layered structure with a lower level performance. This may for example be a layered structure providing an environmentally resistant surface opposed to the super environmentally resistant surface.

### Description of the Drawing

Embodiments of the invention will be described in the figures, whereon:
Fig. 1 illustrates two embodiments of a layered structure.
Fig. 2 illustrates one embodiment of a layered structure.
Fig. 3 illustrates one embodiment of a layered structure with an outer surface structure.
Fig. 4 illustrates two embodiments of a layered structure, a 5- and a 6-layered structure respectively.
Fig. 5 illustrates different uses of a layered structure.
Fig. 6 illustrates one embodiment of the process for obtaining a layered structure.

**Detailed Description of the Invention**

| **Item** | **No** |
|---|---|
| 10 | Layered structure |
| 12 | Layer |
| 14 | Sandwich construction |
| 20 | Substrate face |
| 30 | Adhesion layer |
| 32 | Attachment surface |
| 40 | Intermediate layer |
| 50 | Top stack |
| 52 | Top layer |
| 54 | Outer surface |
| 56 | Outer surface structure |
| 60 | Functional layer |
| 62 | Layer-functionality |
| 70 | Functionalized graphene-containing material |
| 80 | Functional surface area |
| 82 | Surface-functionality |
| 90 | Feature layer |
| 100 | Layer thickness |
| 110 | Foil |
| 112 | Foil outer surface |
| 120 | Coating |
| 130 | Heat producing |
| 132 | Conductive |
| 134 | Resilient/elastic |
| 135 | Radiation absorbent |
| 136 | Hydrophobic |
| 138 | Surface structure |
| 150 | Surface area |
| 160 | Surface |
| 170 | Blade surface |
| 172 | Leading edge face |
| 190 | Functionalized graphene |
| 192 | Carrier material |
| 194 | Granulate |
| 196 | Single layer foil |
| 200 | Method |
| 210 | Retrofitting |
| 220 | Attaching |
| 300 | Process |
| 310 | Providing |
| 320 | Mixing |
| 330 | Making |
| 340 | Extruding |
| 350 | Receiving |
| 400 | Use |

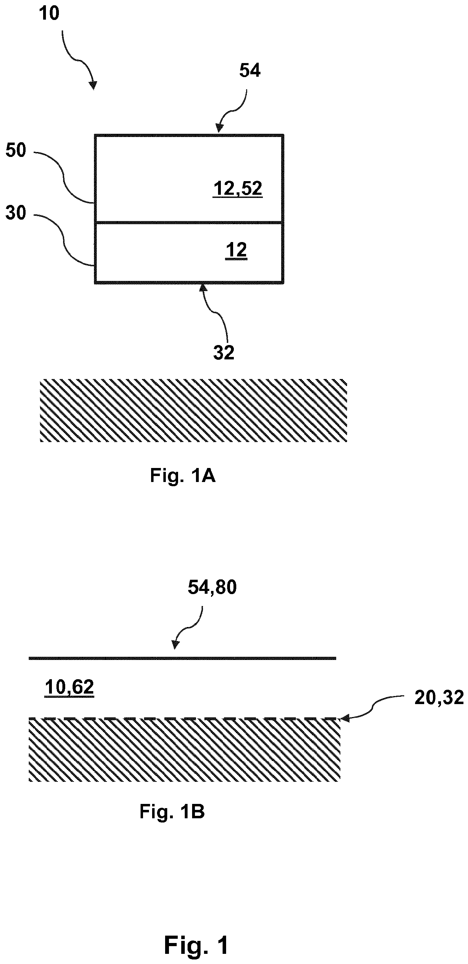

Figure 1 illustrates two embodiments of a layered structure 10 adapted to be attached to a substrate face 20.

Figure 1A illustrates a layered structure 10 with two layers 12. The layered structure 10 is illustrated not being attached to a substrate. The substrate is illustrated by the hatched area. The layered structure 10 comprises an adhesion layer 30 with an attachment surface 32. The attachment surface 32 is adapted to attach to a substrate face 20. The layered structure 10 also comprises a top layer 52. The top layer 50 and the adhesion layer 30 are arranged in a sandwich construction. The top layer 52 comprises an outer surface 54. The outer surface 54 faces away for the attachment surface 32 and from the substrate.

Figure 1B illustrates a layered structure 10 attached to a substrate face 20. The layered structure 10 has an outer surface 54 with a functional surface area (80) caused by a functional layer configured with a layer-functionality 62.

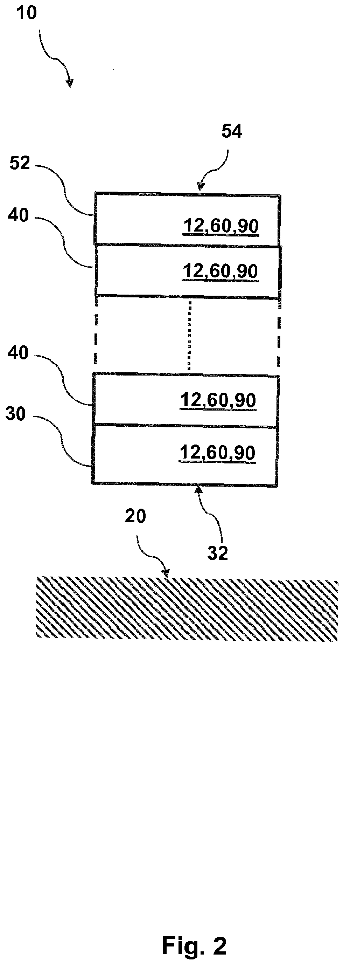

Figure 2 illustrates a layered structure 10 with multiple layers 12. The layered structure 10 illustrated is not attached to the substrate face 20. The layered structure 10 comprises an adhesion layer 30 with an attachment surface 32 facing the substrate face 20. The attachment surface 32 is adapted to attach to the substrate face 20. The layered structure 10 comprises a top layer 52 and a number of intermediate layers 40 illustrated by the dotted lines. In the illustrated embodiment, the explicitly illustrated layers 12 are indicated as functional layers 60 or feature layers 90. The top layer 52 comprises an outer surface 54.

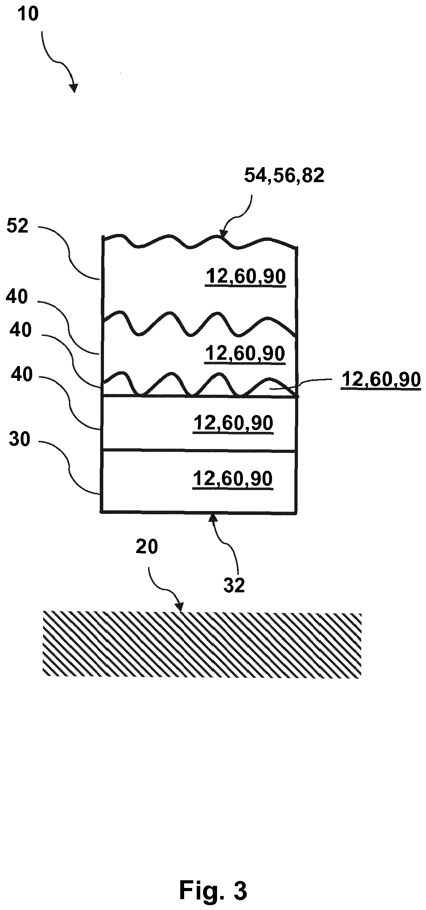

Figure 3 illustrates a layered structure 10 with multiple layers 12. The layered structure 10 illustrated is not attached to the substrate face 20. The layered structure 10 comprises an adhesion layer 30 with an attachment surface 32 facing the substrate face 20. The attachment surface 32 is adapted to attach to the substrate face 20. The layered structure 10 comprises a top layer 52 and three intermediate layers 40. In the illustrated embodiment, all of the layers 12 are indicated as functional layers 60 or feature layers 90. The top layer 52 comprises an outer surface 54. One of the intermediate layers 40 comprises a structure surface. This structured surface causes the outer surface 54 to have a functional surface area with an outer surface structure 56 and a surface functionality 82. The outer surface structure 56 is illustrated as being smoothened compared to the surface structure of the intermediate layer 40, which causes the surface functionality 82.

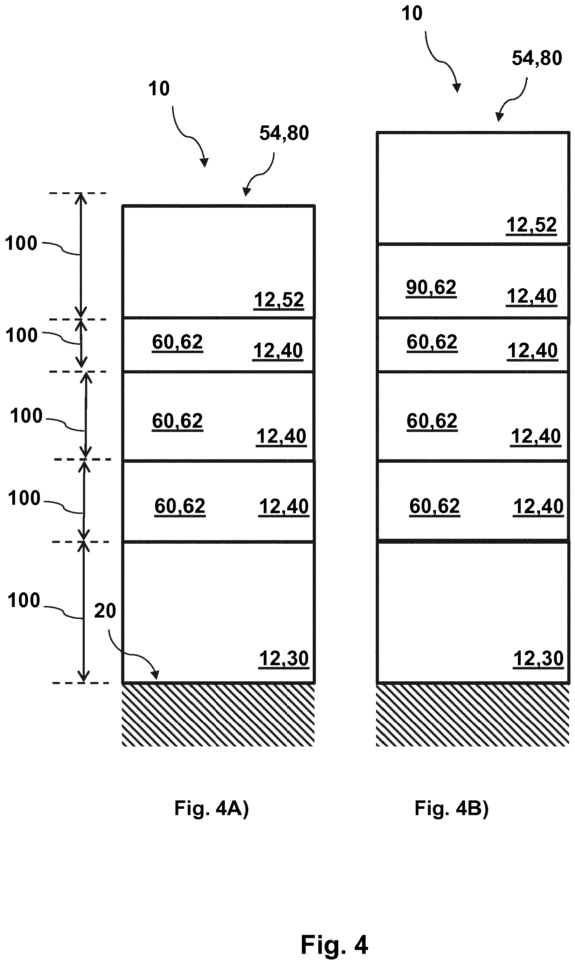

Figure 4A illustrates a layered structure 10 with five layers 12. The layered structure comprises an adhesion layer (30), three intermediate layers 40 and a top layer 52. The layers each have individual film thicknesses 100. The intermediate layers 40 are functional layers 60, each with a layer-functionality 62. The layered structure is attached via the adhesion layer 30 to a substrate face 20. The outer surface 54 is facing away from the substrate. The layered structure 10 provides a functional surface area 80 to the surface.

Figure 4A may illustrate a layered structure accommodating a surface being super hydrophobic and particle repellant. The top layer 52 may be a transparent mat polymer film with a thickness of 300µm. The intermediate layer 40 adjacent to the top layer may accommodate a functional layer being light-absorbing and thus with a reduced light reflectance back to the top layer 52. The intermediate layer 40, adjacent to the light-absorbing layer, may be a conductive functional layer accommodating for Joule heating to support a de-icing functionality. The next intermediate layer 40, being the layer between the conductive functional layer and the adhesion layer 30 may accommodate a functional layer being an organic solar cell or a photovoltaic. This layer may provide a layer-functionality 62 of delivering power to the Joule heating and thus the de-icing functionality. The adhesion layer 30 may be a 100µm polymer layer. The polymer could be polyethylene.

Figure 4B illustrates a layered structure 10 with six layers 12. The layered structure comprises an adhesion layer (30), four intermediate layers 40 and a top layer 52. The layers each have individual film thicknesses 100. Three of the intermediate layers 40 are functional layers 60, each with a layer-functionality 62. The fourth intermediate layer 40 is a feature layer 90 with a layer-functionality 62. The feature layer 90 is arranged adjacent to the top layer and a functional intermediate layer. The layered structure is attached via the adhesion layer 30 to a substrate. The outer surface 54 is facing away from the substrate. The layered structure 10 provides a functional surface area 80 to the surface.

Figure 4B may illustrate a layered structure accommodating a surface being super environmentally resistant. The top layer 52 may be a transparent elastic mat polymer film with a thickness of 300µm. The intermediate layer 40 being a feature layer 90 adjacent to the top layer to accommodate a layer-functionality 62 being flexible and impact-absorbing. This may be provided by a 60µm transparent acrylic PSA film, however other polymer films may also be used. The impact-absorbing feature layer 90 may cause the functional surface area to provide for a functional surface area being super environmentally resistant. This may be due to dampening the impacts of particles inflicting on the surface area. The remaining four layers of the layered structure 10 - the three intermediate functional layers and the adhesion layer - may be a structure similar to that of the illustrated embodiment in figure 4B with a functional layer being light-absorbing, a conductive functional layer accommodating for Joule heating to support a de-icing functionality, a functional layer being an organic solar cell or a photovoltaics layer, and the adhesion layer 30.

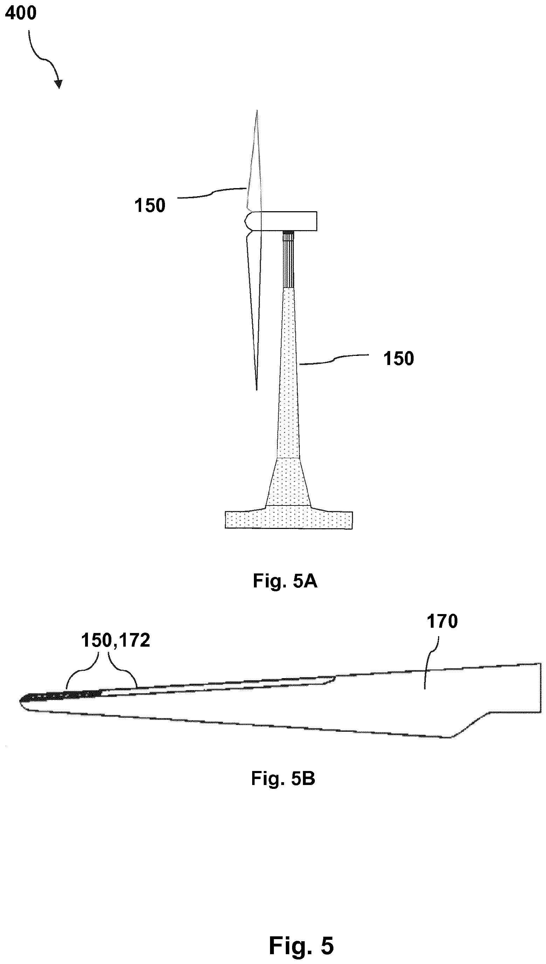

Figure 5 illustrates two different embodiments of the use (400) of a layered structure. Figure 5A illustrates the use of the layered structure on two different surface areas 150 on a wind turbine: the blades and the tower. Figure 5B illustrates the use of the layered structure on a wind turbine blade 170. The surface area 150 may be limited to the leading edge 172. Alternatively, a different layered structure may be attached to the remaining surface. The layered structures to be use could be the layered structures of figure 4A and figure 4B, with the structure from figure 4B providing a super environmentally resistant surface being attached to the leading edge. The structure from figure 4A accommodating a surface being super hydrophobic and particle repellant could be used on the remaining surface.

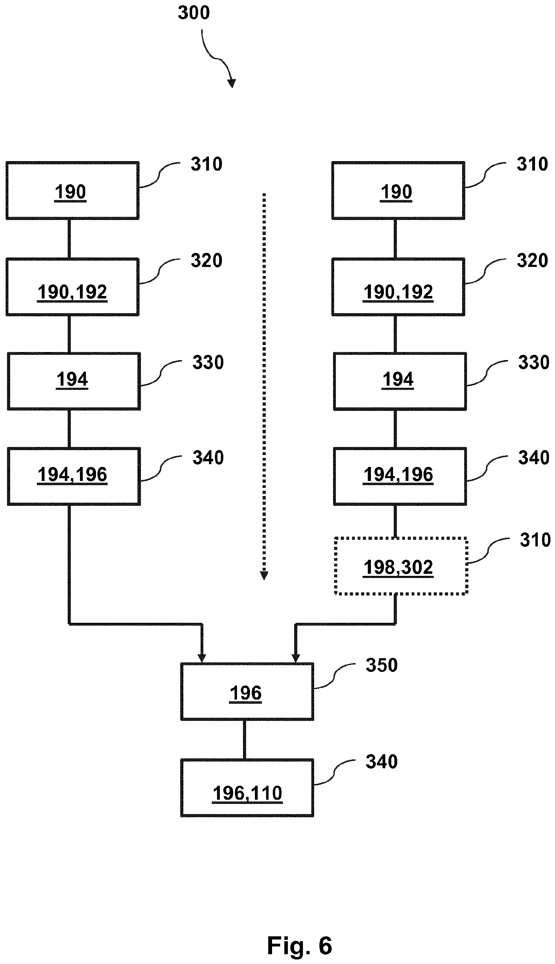

Figure 6 illustrates one embodiment of the process 300 by which the layered structure may be obtained. The process comprising for each functional layer one or more acts of:
- Providing 310 functionalized graphene 190;
- Mixing 320 the functionalized graphene 190 into a carrier material 192;
- Making 330 a granulate 194 suitable for extrusion, and
- Extruding 340 the granulate 194 into a single layer foil 196.

The single layer foils 196 may be extruded in a parallel process. Alternatively, the single layer foils 196 may be extruded 340 in subsequent sequences and rolled for temporary storage until use.

The dotted line illustrates the several sequences comprising the acts of providing 310 functionalized graphene 190; mixing 320 the functionalized graphene 190 into a carrier material 192; making 330 a granulate 194 suitable for extrusion, and extruding 340 the granulate 194 into a single layer foil 196 may be performed - one for each single layer foil 196.

Subsequently, the process for obtaining the multilayer film further comprising acts of:
- Receiving 350 multiple single layer foils 196 in parallel, and
- Extruding 340 the single layer foils 196 into a foil 110 having a layered structure.

In a further embodiment the process 300 may include a further act of providing 310 a surface structure 198 to a single layer foil 196. This act is illustrated by the dotted box added to one of the sequences. The surface structure 198 may be provided to a single layer foil 196 by a printing process 302. The surface structure 198 may be applied before performing the existing acts in the method 300 of receiving 350 multiple single layer foils 196 and extruding 340 these into a foil 110 with the layered structure.

## Claims

1. A layered structure (10) with multiple layers (12) to be attached to a substrate face (20), said layered structure (10) comprising:
- an adhesion layer (30) with an attachment surface (32), the adhesion layer (30) adapted to attach to the substrate face (20) with the attachment surface (32) facing the substrate face (20); and
- a top stack (50) comprising a top layer (52) with an outer surface (54);
the adhesion layer (30) and the top stack (50) are arranged in a sandwich construction, (14) wherein the top stack (50) is attached to the adhesion layer (30) with the outer surface (54) facing away from the adhesion layer (30), **characterized in that** at least one layer (12) is a functional layer (60) containing functionalized graphene-containing material (70), said functional layer (60) is configured with a layer-functionality (62), and said layered structure (10) provides a functional surface area (80) to the substrate face (20), said functional surface area (80) having a surface-functionality (82) caused by the layer functionality (62).

2. The layered structure (10) according to claim 1, wherein the top stack (50) comprises at least one intermediate layer (40) arranged between the adhesion layer (30) and the top layer (50) in the sandwich construction (14).

3. The layered structure (10) according to any one or more of the preceding claims, wherein two layers (12) are functional layers (60), with one functional layer (60a) having a layer-functionality (62a) different from the layer-functionality (62b) of another functional layer (60b).

4. The layered structure (10) according to any one or more of the preceding claims, wherein at least one layer (12) is a feature layer (90), said feature layer (90) is configured with a layer-functionality (62).

5. The layered structure (10) according to any one or more of the preceding claims, wherein the top layer (52) is made of a resin, the resin having a layer thickness (100) in a cured state in the range of 100-1000µm (1E-6m), preferably in the range of 100-500µm or even more preferably in the range 200-400µm, and an adhesion layer (30) made of a resin, the resin having a layer-thickness (100) in a cured state in the range of 20-500µm, preferably in the range of 50-300µm or even more preferably in the range 70-150µm.

6. The layered structure (10) according to any one or more of the preceding claims configured as a foil (110) with foil outer surfaces (112), said foil outer surfaces (112) being the attachment surface (32) and the outer surface (54) provided by the layered structure (10), said foil (110) is adapted to be attached to the substrate face (20) with the attachment surface (32).

7. The layered structure (10) according to any one or more of claims 1-5 configured as a coating (120) deposited in a sandwich construction (14), with the adhesion layer being deposited on the substrate face (20) and the top stack (50) deposited on the adhesion layer (30) with the outer surface (52) facing away from the substrate face (20).

8. The layered structure (10) according to any one or more of the preceding claims comprising a functional layer (60) being electrically conductive (132).

9. The layered structure (10) according to any one or more of the preceding claims comprising a functional layer (60) or a feature layer (90) being radiation-absorbent (135).

10. The layered structure (10) according to any one or more of the preceding claims, comprising a functional surface area (80) being hydrophobic (72).

11. The layered structure (10) according to any one or more of the preceding claims comprising a functional surface area (80) with an outer surface structure (56).

12. Use (400) of the layered structure (10) according to any of the claims 1 to 11 on a surface area (150) with a substrate face (20).

13. A layered structure (10) according to any one of claims 1-11 obtained by a process (300) comprising for each functional layer (60) one or more acts of:
- Providing (310) functionalized graphene (190);
- Mixing (320) the functionalized graphene (190) into a carrier material (192);
- Making (330) a granulate (194) suitable for extrusion, and
- Extruding (340) the granulate (194) into a single layer foil (196),
said process (300) further comprising acts of:
- Receiving (350) multiple single layer foils (196) in parallel, and
- Extruding (340) the single layer foils (196) into a foil (110) with a layered structure (10).

14. A layered structure (10) obtained according to claim 13 by a process (300) comprising a further act of providing (310) a surface structure (198) to a single layer foil (196) by a printing process (302) before performing the existing acts of receiving (350) multiple single layer foils (196) in parallel and extruding (340) the single layer foils (196) into a foil (110) with a layered structure (10).

15. Method (200) for retrofitting (210) a surface having at least one surface area (150) with a substrate face (20) said method (200) comprising an act of attaching (220) a layered structure (10) according to any one of claims 1-11 to the at least one surface area (150).
